# EUROPEAN PATENT APPLICATION

(11) **EP 3 278 670 A1**
(43) Date of publication of application: **07.02.2018**
(21) Application number: 15887357.0
(22) Date of filing: 17.12.2015
(51) Int. Cl.: A22B 5/00

(54) **DEVICE FOR CLEANING AND FOR PROCESSING THE RECTUM AND PELVIS OF SLAUGHTERED PIGS AND OPERATING METHOD OF SAID DEVICE**

(30) Priority: 30.03.2015 ES 201530426
(71) Applicant: Innovative Food Robotics-BANSS & AIRA, S. L., 08261 Cardona (ES)
(72) Inventor: JANÉ LÓPEZ, Francisco Javier, 08261 Cardona (ES)
(74) Representative: Oficina Ponti, SLP
(86) International application number: PCT/ES2015/070921
(87) International publication number: WO 2016/156633

(57) **Abstract**

The invention relates to a device for cleaning and processing the rectum and pelvis of slaughtered pigs, that is mainly mechanical in nature, and its operating method and that it solves the problem of the cleaning and disinfection operations of these devices, basically of the blades and the mandrel which are inserted into the animal's rectum, this invention carries out these operations in a single operation, which allows it to successively in about 2 to 3 seconds enter the animal's rectum, cut it out and make an incision in the animal's pelvis and then simultaneously clean and sterilise by incorporating into the device a semi-enclosed chamber in which this cleaning takes place.

## Description

### Object of the invention

More specifically, the invention relates to a device for cleaning and processing the rectum and pelvis of slaughtered pigs and the operating method of the device the arrangement of which is mainly mechanical in nature, which allows it, in a period of about 2 to 3 seconds, to enter the animal's rectum, cut it out, create an incision in the animal's pelvis and, simultaneously clean and sterilise itself, as the device incorporates a semi-enclosed chamber in which this process can take place.

### State of the Art

Devices for the cleaning and processing of the rectum of slaughtered pigs are available on the market and they can, therefore, be considered as the state of the art, this cleaning usually takes place on the continuous chains commonly found in all industrial slaughterhouses, for example, that described and claimed in European Patent No. 1,115,292.
Said patent consists of an apparatus with a means of suction for a disinfectant substance, supplied to a cavity occupied by a cylindrical blade, separated from the means in order to establish the negative pressure to empty a part of the rectum and comprising an arrangement for establishing an additional negative pressure in said cavity.

Another of the references contained in the state of the art is European Patent No. 457,409 which describes and claims a device for separating the pubis from the body of a slaughtered animal, specifically that of a pig comprising a positioning element, a rotating cylindrical cutter and a blade-like cutting disc that are combined in a functional unit that can be moved in its entirety from the carcass.

Another of the references found is European Patent No. 258,939, the object of which is a piece of equipment for cutting and opening the body of a dead animal, mainly the pubis of the carcass of the dead animal, an element for positioning the slaughtered animal is claimed, an initial cutting element and a second cutting element, together with a sensor coupled to the second cutting element for locating the pubis, all combined in a functional unit.

In all the embodiments of these references the cleaning of the parts that make up the devices can clearly be improved, since in most cases this is carried out automatically by submerging the cutting head in a tank containing water and disinfectant, which, although it cleans automatically, does not ensure the cleaning.

### Purpose of the Invention

To improve the cutting of the rectum and sectioning of the pelvis and the subsequent cleaning of the means used for this purpose, all without delaying the movement of the continuous chains that industrial slaughterhouses are equipped with.

### Description of the Invention

Health in the field of human food products requires solutions to be found that improve the state of the art and, more specifically in our case, requires the creation of means to ensure the perfect handling of animals, preferably but not exclusively pigs, to prevent these solutions from contaminating the entire process of cutting up the animal, as well as certain shortcomings that force the withdrawal of some units, where a bad cut to the pig can mean that some parts must be discarded, with the consequent economic losses.

Within the cutting process, and in one of the initial stages, the rectum of a slaughtered pig must be removed, first by cutting it and then by removing it, evacuating the deposits it contains, without this resulting in a loss of hygiene or the contamination of the other parts of the animal and, simultaneously, or subsequently, an incision has to be made in the pelvis that allows the separation of the hind quarters.

The present invention consists of, that in an orderly manner after cutting and removing the rectum and evacuating the deposits it contains, the means used in such operations are cleaned effectively, including the blade and the mandrel introduced in a programmed way within the animal's rectum.

The cleaning of the device is possible as the design allows for these means, comprising a mandrel and some cutting knives, to remain for a period of some 2 to 3 seconds inside a cavity formed by the closing together of two articulated valves, so that the cavity is formed when one valve drops onto the other, pressurised water or disinfectant or a combination of them is introduced into the interior through an input conduit so as to clean everything that is inside the cavity mainly the mandrel and the cutting blades, the fluids are then evacuated along with particles of dirt collected by the cleaning through an output provided in the lower valve.

These valves, in addition to being designed so that their edges are facing each other when the upper valve drops over the lower one forming a semi-enclosed chamber, also have means that allow them to move from a position on the far left of the device, where they are completely separate, to the extreme right where they together, one over the other.

These means comprise a set of levers that, at one end, are attached to the body of the valves, while at the opposite end they are attached to supports or slides that push the articulated levers by means of connecting rods, one end of which is joined to the levers, while at the other end these rods are attached to the head of a stem that moves from right to left and vice versa, through the action of a pneumatic or hydraulic cylinder on the stem.

The action of opening and closing the cavity, which involves the separation of the valves and their coming together respectively, takes place in combination with the action of a mandrel that slides to the right and left and vice versa, as well as the extension of the mandrel in conjunction with it, along with a knife that also describes the same movement and which produces an incision to the animal's hind quarters breaking the pelvis, without cutting the thighs or hams which are handled separately once the pig has been cut apart, if these parts were cut they could not then be used with the consequent economic loss.

Other details and characteristics will become apparent in the description provided below, in which reference is made to the figures in which a practical embodiment of the invention is shown by way of illustration that is not limiting, it can be carried out with all kinds of materials where they are appropriate.

### Description of the figures

The following is a list of the different parts of the invention, which are located in the following figures using the numbers listed below: 10 arrangement, 11 upper valve, 12 lower valve, 13 fluid output, 14 lower base, 15 set of levers, 16,17 levers, 18 blade, 19 blade holder, 20 mandrel, 20b lateral surface of the mandrel, 21 extension, 22 pneumatic and/or hydraulic cylinder, 23 support rod, 24 stem, 25 head, 26 joints, 27 connecting rods, 28 semi-enclosed cavity, 29 joints, 30 screws, 31 knife support, 32 slide, 33 bench, 34 mounting plate support, 35 robot, 36 tubular element, 37 arm, 38 appendages, 39 guide rail, 40 plates, 41 water input conduit, 42 circular blade.
Figure No. 1 is a side elevation view of the device 10, in which it is possible to see the upper and lower valves 11,12 articulated by the levers 16,17.
Figure No. 2 is a side elevation view of the device 10, showing the valves 11,12, displaced to the right by the movement of the levers 16,17 due to the action of the pneumatic cylinder 22 on the connecting rods 27 and on these levers 16,17, covering the mandrel 20 and the extension 21 with the valves 11,12 forming the semi-enclosed cavity 28.
Figure No. 3 is a partial side elevation view of the device 10 with the parts that allow the movement of the valves 11,12, this occurs as they are arranged at one end of the levers 16,17, their rotation with respect to the support plates 23 with the aid of the joints 26 and 29 connected to the connecting rods 27 and these rods connection to the head 25 of the stem 24 of the pneumatic cylinder 22.
Figure No. 4 is a similar view to Figure No. 3 in which the valves 11,12 are withdrawn to the left of the device 10.
Figure No. 5 is a perspective view of the device 10 mounted on a bench 33 and the latter to a plate support 34 mounted on an arm 37, which attaches to a robot 35 not detailed in this figure.

### Preferred embodiment of the invention

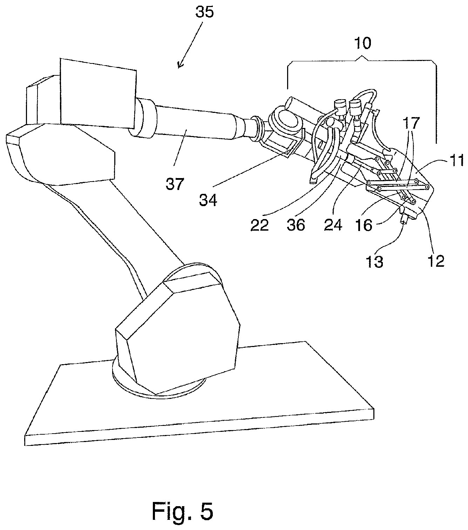

In one of the preferred embodiments of the invention and as can be seen in Figure No. 5 the recommended device 10 is available on a conventional robot 35 and, by means of a support plate 34, mounted on an arm 37 of the robot 35, for which it is attached to a tubular element 36 perpendicular to said support plate 34, which incorporates the pneumatic or hydraulic cylinder 22 that operates the levers 16,17, attaching the levers 16,17 to the support plates 23 that are moved to either side of the tubular element 36 with the aid of the appendages 38 that form a single piece with the support plates 23 as described below.

The core of the invention is the device 10, although to facilitate the understanding of the invention from the perspective of Figure No. 5 only part of it has been reproduced, based on a robot 35 and a robot arm 37, the robot 35 is completely conventional and, as indicated previously the device 10 is mounted on the robot 35.

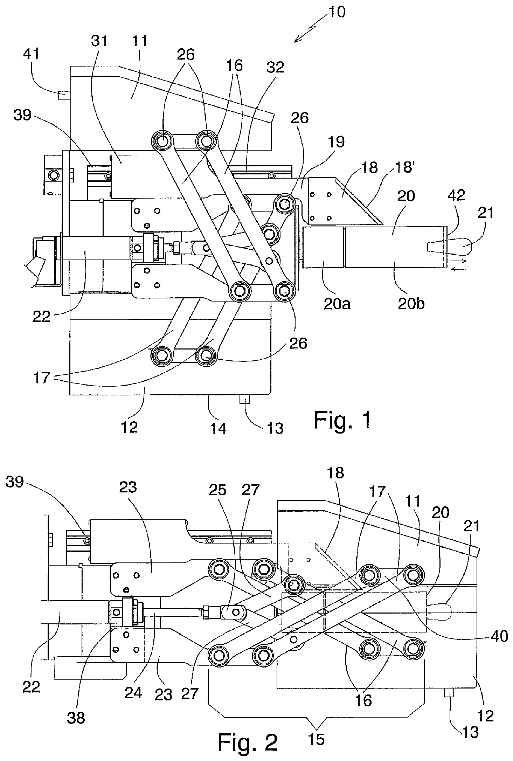

As the device 10 is asymmetrical it is reproduced in Figures No. 1 - 4, for greater precision in the description, such that in Figure No. 1 the two valves 11,12 appear in the extreme left position, exposing the mandrel 20 which emerges from the end of the tubular element 36.

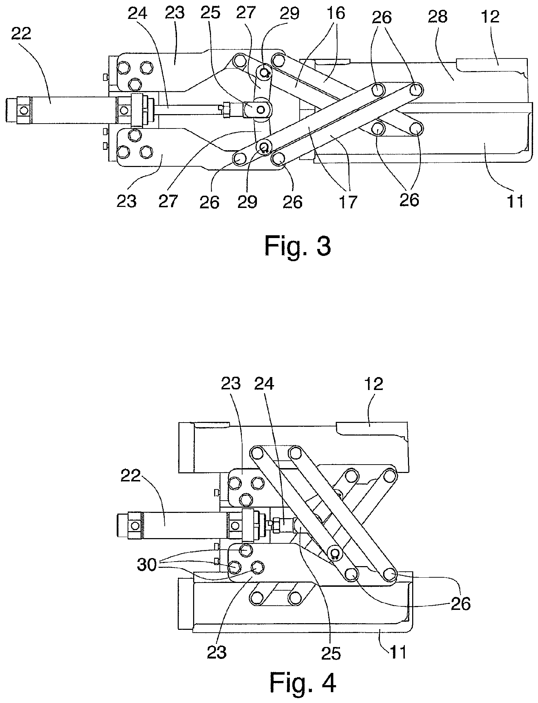

These valves 11,12 move from the position indicated in Figure No. 1, to a position to the extreme right represented in Figure No. 3, it being possible for these valves 11,12 to make this movement from left to right and vice versa by the combined action of a set of levers 15.
The aforementioned set of levers 15 as can be seen in Figure No. 2 includes the levers 16,17 themselves, whose ends are attached at one end to the valves 11,12, reinforcing the valves 11,12 with plates 40 and the opposite ends are attached to support plates 23 and connecting rods 27, which at one end join the levers 16,17 and at the other join the head 25 of a shaft 24 of a pneumatic or hydraulic cylinder 22, where the action of pushing the stem 24 forces the connecting rods 27 to push or pull the levers 16,17, with the aid of the corresponding joints 26.

The extension 21 extends out of one end of the mandrel 20 allowing the passage of air and water within it to place the mandrel 20 and the extension 21 into the working position inside the animal's rectum, which surrounds the lateral surface 20b of the mandrel 20 so that it is possible to cut it out due to the action of a blade 18 mounted on the blade holder 19 and this blade holder 19 is attached to the knife support 31, which moves left and right along the guide rail 39 as can be seen in Figures No. 1 and 2.

As a characteristic of the invention, the function of the valves 11,12 when folded one over the other, see Figures No. 3 and 5, is to create a semi-enclosed cavity into which water and air is injected by the input conduit 41 in the upper valve 11 for cleaning both the blades 18 and 42 as well as the mandrel 20 and its extension 21 when they have finished their work and are in the interior of this semi-enclosed cavity, which takes advantage of the time that passes between the cutting of one animal and the next on the continuous chain, as part of this cleaning the dirty water discharges through the fluid output 13 at the bottom of the bottom valve 12, as a result the mandrel 20, the extension 21 and the blades 18 and 42 do not come into contact with dirty water and they will, therefore, not contaminate the next animal.

The operating cycle of the device 10 begins when the already slaughtered animal, which is hanging by its hind quarters from the continuous chain, is placed by appropriate means in front of the device 10 and remains still for around 2 to 3 seconds, when the following movements take place.
- The extension 21 and mandrel 20 are introduced through the animal's rectum to a predetermined depth, leaving the blade 18 facing the animal's hind quarters.
- The mandrel 20 extends from the left to the right inside the rectum and removes it with the help of a circular blade 42, located at the right end of the mandrel 20 sucking the pieces of the rectum and the faeces contained therein through the duct provided in the extension 21.
- The blade 18 moves from left to right due to the action of the knife support 31, which moves along the guide rail 39 and produces an incision in the central part of the pelvis.
- The blade 18 moves back from right to left due to the action of the knife support 31 guided by the guide rail 39, along with the mandrel 20 and the extension 21, the valves 11,12 are closed forming a semi-enclosed cavity 28 and simultaneously water and air enter through the input conduit 41, when inside the semi-enclosed cavity 28 this water cleans the blades 18 and 42 the mandrel 20 and the extension 21, the water and dirt leave by the output 13.

The present invention is sufficiently described in correlation with the attached figures, it is easy to understand that any detailed modifications could be made to it that may be deemed suitable, provided that the invention is not disturbed, which is summarised in the following claims.

## Claims

1. Device for cleaning and processing the rectum and pelvis of slaughtered pigs (10) that is attached to a robot (35), the arm (37) of which has a function that includes the partial cutting of the rectum and the incision of the animal's pelvis, which is carried out by means of a first blade (18) in combination with a mandrel (20) with a circular blade (42) and an extension (21), **characterised in that** the device (10) is attached to a tubular element (36) perpendicular to a mounting plate support (34) mounted on an arm (37) of a robot (35), the mounting plate support (34) incorporates a pneumatic and/or hydraulic cylinder (22) and the device (10) comprises:
- articulated valves (11,12),
- levers (16,17) attached at one end to a support plates (23) located to the right and left of this tubular element (36), and at the other end to the articulated valves (11,12), and
- connecting rods (27), which, at one end are connected to the levers (16,17) and at the opposite ends are attached to the head (25) of the stem (24) of a pneumatic and/or hydraulic cylinder (22),
where the valves (11,12) are adapted to drop down against each other, so creating a semi-enclosed cavity (28) where the blades (18,42) as well as the mandrel (20) and its extension (21) are inside.

2. Device for cleaning and processing the rectum and pelvis of slaughtered pigs according to claim 1, **characterised in that** the upper valve (11) has an input (41) and the bottom valve (12) contains an output (13) in its part lower.

3. Device for cleaning and processing the rectum and pelvis of slaughtered pigs according to claim 1, **characterised in that** a circular blade (42) and an extension (21) extend from the lateral surface (20b) of the mandrel (20), both the mandrel (20) and the extension (21) are adapted to move into a working position within the animal's rectum.

4. Device for cleaning and processing the rectum and pelvis of slaughtered pigs according to claim 1, **characterised in that** the blade (18) is flat and has a cutting edge (18').

5. Operating method of a device for cleaning and processing the rectum and pelvis of slaughtered pigs defined in any claims 1 to 4, **characterised in that** it comprises the following operations:
- The extension (21) and mandrel (20) are introduced through the animal's rectum to a predetermined depth, leaving the blade (18) facing the animal's hind quarters.
- The mandrel (20) extends from the left to the right inside the rectum and removes it with the help of a circular blade (42), located at the right end of the mandrel (20) sucking the pieces of the rectum and the faeces contained therein through the duct provided in the extension (21).
- The blade (18) moves from left to right due to the action of the knife support (31), which moves along the guide rail (39) and produces an incision in the central part of the pelvis.
- The blade (18) moves back from right to left due to the action of the knife support (31) guided by the guide rail (39), along with the mandrel (20) and the extension (21), the valves (11,12) are closed forming a semi-enclosed cavity (28) and simultaneously water, disinfectant and air enter by the input conduit (41), when inside the semi-enclosed cavity (28) this mixture cleans the blades (18) and (42) the mandrel (20) and the extension (21), the water and dirt leave by the output (13).
